Europäisches Patentamt

European Patent Office

Office européen des brevets

(11) Veröffentlichungsnummer: **0 217 998**
**A1**

# (12) EUROPÄISCHE PATENTANMELDUNG

(21) Anmeldenummer: 86102300.0

(22) Anmeldetag: 21.02.86

(51) Int. Cl.⁴: **C04B 28/02** , C04B 40/00 ,
//(C04B28/02,24:02,24:18,24:32)

(30) Priorität: 03.09.85 DE 3531423

(43) Veröffentlichungstag der Anmeldung:
15.04.87 Patentblatt 87/16

(84) Benannte Vertragsstaaten:
AT BE CH DE FR GB IT LI NL SE

(71) Anmelder: **Ludwig Hoerling Fabrik chem.**
**Baustoffe GmbH**
**Bussemeyerweg 10**
**D-3280 Bad Pyrmont(DE)**

(72) Erfinder: **Hoerling, Ludwig**
**Seipstrasse 14**
**D-3280 Bad Pyrmont(DE)**

(74) Vertreter: **Ullrich, Thurmod, Dr.**
**Gaisbergstrasse 3**
**D-6900 Heidelberg(DE)**

(54) Zusatzmittel für Beton- und Mörtelmischungen und Verfahren zu seiner Herstellung.

(57) Die Erfindung betrifft ein Zusatzmittel für hydraulische anorganische Bindemittelsysteme zur Verflüssigung, Langzeitverflüssigung und Verbesserung der Frühfestigkeit und enthält wasserunlösliche Substanzen, wie Harze, Bitumina, polykondensierte Kunststoffe und/oder nicht wasserlösliche in Lösungsmitteln gelöste Tenside in einem emulgierfähigen wässrigen System, vorzugsweise aus Ligninsulfonaten bzw. Sulfitablaugen.

EP 0 217 998 A1

## Zusatzmittel für Beton-und Mörtelmischungen und Verfahren zu seiner Herstellung

Die Erfindung betrifft ein Zusatzmittel für hydraulische anorganische Bindemittelsysteme, wie beispielsweise Zemente, Tonerde-Schmelzzemente, Flugaschen, Gips und dergleichen zur Verflüssigung, Langzeitverflüssigung und Reduzierung der verzögernden Wirkung bzw. der Verbesserung der Frühfestigkeit und ein Verfahren zu seiner Herstellung.

Dispergiermittel für anorganische Bindemittel, wie z.B. Zement oder Gips, sind seit langem bekannt. Sie werden entweder zur Viskositätserniedrigung (Verflüssigung) einer Bindemittelsuspension bei gegebenem Wasser-Bindemittel-Faktor oder zur Reduzierung des Wasseranspruchs bei gleichbleibender Konsistenz eingesetzt.

M.R. Rixom beschreibt in seinem Buch "Chemical Admixtures for Concrete" (London 1978) insgesamt fünf chemisch verschiedene Gruppen von Dispergiermitteln, welche in der modernen Betontechnologie bekannt sind: Melamin-und Naphthalon-Formaldehyd-Sulfonsäureharze, Ligninsulfonate, Hydroxycarbonsäuresalze und hydrohylierte Polymere auf Polysaccharid-Basis. Darüberhinaus offenbart DE-OS 3 144 673 eine weitere neuartige Klasse von Dispergiermitteln, welche aus Säuregruppen enthaltenden Keton-Aldehyd-Kondensationsprodukten besteht.

Die Wirkung dieser bekannten Dispergiermittel ist jedoch verschieden. So bezeichnet Rixom die Melamin-und Naphthalin-Formaldehyd-Sulfonsäureharze allgemein als "Superverflüssiger", da sie die bei weitem größte Dispergierwirkung besitzen und keine unerwünschten Nebeneffekte bedingen. Auch die in der DE-OS 3 144 673 beschriebenen Keton-Aldehyd-Harze werden aufgrund ihrer ausgezeichneten Dispergiereigenschaften den "Superverflüssigern" zugerechnet. Ligninsulfonate sind weniger wirksame Verflüssiger und besitzen zudem den Nachteil, daß sie selbst in gereinigter, zuckerfreier Form die Zementhydration deutlich verzögern.

Dem Fachmann ist aber bekannt, daß Melamin-und Naphthalin-Formaldehyd-Sulfonsäureharze sowie Ligninsulfonate bei höheren Gehalten der erwähnten anorganischen und organischen Salze in der Bindemittelsuspension ihre gute Dispergierwirkung rasch verlieren.

Die Aufgabe der Erfindung besteht nun darin ein Zusatzmittel der gattungsmäßigen Art anzugeben, das einen verbesserten Verflüssigungseffekt, eine Langzeitverflüssigungswirkung und deutlich verbesserte Früh festigkeiten bewirkt.

Die Lösung dieser Aufgabe wird durch die technische Lehre vermittelt, daß das Zusatzmittel wasserunlösliche Substanzen, wie Harze, Bitumina, polykondensierte Kunststoffe und/oder nicht wasserlösliche, in Lösungsmittel gelöste Tenside in einem emulgierfähigen wässrigen System enthält.

Durch Kombination mit Lignin-Sulfonaten mit wasserunlöslichen Tensiden, in organischen Lösungsmitteln gelöst, und durch weitere Zugabe von in organischen Lösungsmitteln gelösten wasserunlöslichen Harzen wird dieses Zusatzmittel hergestellt. Nicht wasserlösliche Netzmittel, wie z.B. Nonylphenolpolyglykoläther mit maximal 4 Äthylenoxid sind in löslichen Dispergiermitteln, wie z.B. Lignin-Sulfonaten nicht dauerhaft dispergierbar. Sie können jedoch wie gefunden wurde, in organischen Lösungsmitteln vorgelöst, beständig in beispielsweise Lignin-Sulfonaten, dispergiert werden. Durch eine solche Kombination allein erhöht sich die Dispergierfähigkeit einer Sulfitablauge in einem solchen Maße, daß eine 25%ige Sulfitablauge mit 3-4 % Nonylphenolpolyglykoläther mit maximal 4 Äthylenoxid in Toluol gelöst, bei einer Dosierung von 1 % auf das Zementgewicht eine Ausbreitmaßerhöhung von 16-17 cm bewirkt. Der Verflüssigungseffekt hat eine Langzeitwirkung, die von keinen bisher bekannten Dispergiermitteln erreicht wurde. Noch nach einer Stunde beträgt die Ausbreitmaßerhöhung noch 13-14 cm. Es wird mit dieser Kombination erreicht, daß z.B. Lignin-Sulfonate nunmehr mit erheblich größerer und längerer Wirkung als Fließhilfsmittel eingesetzt werden können.

Ein solches Fließhilfsmittel ist jedoch noch nicht universell verwendbar, da es die Zementhydration erheblich verzögert und damit für einen wirtschaftlichen Baufortschritt auf Grund der geringeren Festigkeitsentwicklung, insbesondere nach 24 Stunden, ungeeignet ist.

Diese verzögernde Wirkung wird jedoch, wie gefunden wurde, dadurch beseitigt, daß man der Sulfitablauge zusätzlich nicht wasserlösliche Harze in organischen Lösungsmitteln gelöst, zugibt. Die verzögernde Wirkung der Sulfitablaugen wird in dem Maße verringert, wie der Anteil der Harzlösung erhöht wird. Bei entsprechender Menge der Harzlösung ist die Festigkeit nach 24 Stunden nicht geringer als die eines Vergleichsbetons ohne Zusatzmittel.

Die Erfindung wird anhand einiger Beispiele beschrieben.

Beispiele

1. In 500 l einer 50%igen Sulfitablauge werden unter starkem Rühren 30 kg Nonylphenolpolyglykoläther mit maximal 4 Mol. Äthylenoxid in einer Toloul-Lösung gelöst eingearbeitet. Danach wird die Charge mit Wasser auf 1000 l aufgefüllt. Von dieser Lösung werden zur Herstellung von Fließbeton, 1 % bezogen auf das Zementgewicht dosiert, und es wird das Ausbreitmaß von 40 cm auf 57 cm erhöht. Nach einer Stunde hat der so hergestellte Fließbeton noch ein Ausbreitmaß von 52-53 cm, die Druckfestigkeit nach 24 Stunden beträgt 2,7 N/mm² gegenüber dem ohne Zusatzmittel (O-Beton) von 6,9 N/mm².

2. In 500 l einer 50%igen Sulfitablauge werden unter starkem Rühren 75 l einer Toloul-Lösung eingearbeitet, die 18 kg Cumaronindenharz, 30 kg Nonylphenolpolyglykoläther mit max. 4 Mol Äthylenoxid enthält. Danach wird die Charge mit Wasser auf 1000 l aufgefüllt. 1 % dieser Lösung, bezogen auf das Zementgewicht erhöht das Ausbreitmaß von 40 cm auf 57 cm. Nach einer Stunde hat der so hergestellte Fließbeton noch ein Ausbreitmaß von 53 cm, die Festigkeit nach 34 Stunden betrug 4,2 N/mm² gegenüber dem ≠-Beton von 7 N/mm².

3. In 500 l einer 50%igen Sulfitablauge werden unter starkem Rühren 90 l einer Toloul-Lösung eingearbeitet, die 36 kg Cumaronindenharz und 30 kg Nonylphenolpolyglykoläther mit max. 4 Mol Äthylenoxid enthält. Danach wird die Charge mit Wasser auf 1000 l aufgefüllt. 1 % dieser Lösung erhöht das Ausbreitmaß von 40 cm auf 57 cm. Nach einer Stunde hat der so hergestellte Fließbeton noch ein Ausbreitmaß von 53 cm. Die Festigkeit nach 24 Stunden betrug 6 N/mm² gegenüber dem O-Beton von 7,2 N/mm².

4. In 500 l einer 50%igen Sulfitablauge werden unter starkem Rühren 110 l einer Toloul-Lösung eingearbeitet, die 60 kg Terpenharz und 30 kg Nonylphenolpolyglykoläther mit max. 4 Mol Äthylenoxid enthält. Danach wird die Charge mit Wasser auf 1000 l aufgefüllt. 1 % dieser Lösung erhöht das Ausbreitmaß von 40 cm auf 57 cm. Noch nach einer Stunde hat der so hergestellte Fließbeton ein Ausbreitmaß von 52-53 cm. Die Festigkeit nach 24 Stunden betrugt 7,1 N/mm² gegenüber dem O-Beton von 7 N/mm².

5. Das nach Beispiel 4 hergestellte Zusatzmittel wurde zu einer Betonmischung im K-1-Bereich erdfeucht,zur Herstellung von Pflastersteinen mit ca. 0,25 % bezogen auf Zement zugefügt.

Es ergaben sich folgende Druckfestigkeitswerte in N/mm².

| nach | 3 | 7 | 28 Tagen |
|---|---|---|---|
| O-Beton (ohne Zusatz- mittel) | 25,0 | 31,7 | 42,8 |
| Mit 0,25 % Zusatzmittel | 36,5 | 50,8 | 61,3 |

Beim Ansetzen der Betonmischung hat der K-1-Beton gegenüber der O-Mischung ein um 8 % höheres Schüttgewicht.

**Ansprüche**

1. Zusatzmittel für hydraulische anorganische Bindemittelsysteme, wie beispielsweise Zemente, Tonerde-Schmelzzemente, Flugaschen, Gips und dergleichen zur Verflüssigung, Langzeitverflüssigung und Reduzierung der verzögernden Wirkung bzw. der Verbesserung der Frühfestigkeit, dadurch gekennzeichnet, daß es wasserunlösliche Substanzen, wie Harze, Bitumina, polykondensierte Kunststoffe und/oder nicht wasserlösliche, in Lösungsmitteln gelöste Tenside in einem emulgierfähigen wässrigen System enthält.

2. Mittel nach Anspruch 1, dadurch gekennzeichnet, daß das emulgierfähige System vorzugsweise aus Sulfitablaugen bzw. Ligninsulfonaten besteht.

3. Mittel nach Anspruch 1 und 2, dadurch gekennzeichnet, daß die nicht wässerlöslichen Substanzen in organischen Lösungsmitteln gelöst sind.

4. Mittel nach Anspruch 1 bis 3, dadurch gekennzeichnet , daß es Lösungsvermittler, wie mehrwertige Alkohole, enthält.

5. Verfahren zur Herstellung des Zusatzmittels nach Anspruch 1 bis 4, dadurch gekennzeichnet, daß man eine Lösung aus Harzen, wasserunlöslichen Tensiden, sowie ggf. Lösungsvermittlern in einem organischen Lösungsmittel herstellt und diese in Sulfitablaugen oder Ligninsulfonaten emulgiert.

6. Verfahren nach Anspruch 5, dadurch gekennzeichnet, daß an sich bekannte Luftporenbildner, Verzögerer, Beschleuniger und Dichtungsmittel mitverwendet werden können.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | BE-A- 847 038 (COMPAGNIE DES CIMENTS BELGES) * Seite 2, Zeilen 1-3,12-16,18-23; Seite 6, Zeilen 1-3; Patentanspruch 1 * | 1 | C 04 B 28/02 C 04 B 40/00 // (C 04 B 28/02 C 04 B 24:02 C 04 B 24:18 C 04 B 24:32 ) |
| | --- | | |
| A | US-A-3 079 268 (F.A. BROOKS) * Spalte 1, Zeilen 12-14; Tabelle I; Spalte 2, Zeilen 9,10 * | 1,2 | |
| | --- | | |
| A | CHEMICAL ABSTRACTS, Band 96, Nr. 2, Januar 1982, Seite 280, Zusammenfassung Nr. 10866h, Columbus, Ohio, US; & DD-A-148 231 (K.H. JUNGE) 13-05-1981 | 1,3 | |
| | --- | | RECHERCHIERTE SACHGEBIETE (Int. Cl.4) |
| A | CHEMICAL ABSTRACTS, Band 92, Nr. 4, 28. Januar 1989, Seite 341, Zusammenfassung Nr. 27549x, Columbus, Ohio, US; & JP-A-79 118 431 (I. INOUE) 13-09-1979 | 1,4 | C 04 B 28/00 |
| | --- | | |
| A | US-A-4 351 671 (A.M. ROSENBERG) * Zusammenfassung * | | |
| | --- | | |
| A | US-A-2 483 806 (W.D. BUCKLEY et al.) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 09-12-1986 | DAELEMAN P.C.A. |